# EUROPEAN PATENT SPECIFICATION

(11) **EP 1 926 409 B1**
(45) Date of publication and mention of the grant of the patent: **15.11.2017**
(21) Application number: 06808860.8
(22) Date of filing: 19.09.2006
(51) Int. Cl.: A46B 5/02, A46B 9/04, A46B 13/02, A61C 17/26

(54) **TOOTHBRUSH**
ZAHNBÜRSTE
BROSSE A DENTS

(30) Priority: 21.09.2005 IT BO20050571
(43) Date of publication of application: 04.06.2008
(73) Proprietor: Battaglia, Alessio, 40122 Bologna (IT)
(72) Inventor: Battaglia, Alessio, 40122 Bologna (IT)
(74) Representative: Fanzini, Valeriano
(86) International application number: PCT/IB2006/002591
(87) International publication number: WO 2007/034291

(56) References cited:
- EP-A1- 0 254 460
- EP-A1- 0 709 045
- WO-A1-2004/082515
- CH-A5- 672 052
- GB-A- 472 222
- US-A- 4 672 706
- US-A- 4 780 924
- US-A- 5 025 525
- US-A- 5 228 166
- US-A- 5 315 731
- US-A- 5 778 477
- US-A- 5 930 860
- US-A- 6 018 838
- US-A1- 2003 131 433
- US-B1- 6 353 959

## Description

### Technical Field

This invention relates to a brush for cleaning the teeth.

### Background Art

It is known that toothbrushes currently in use consist of a handle joined to a head by a connecting portion. The head has a plurality of bristles, usually parallel to each other and positioned perpendicularly to a flat surface of the head. Traditionally, the head, the connecting portion and the handle are positioned along a single straight line and the bristles are perpendicular to the line. The straight line is also the axis about which the toothbrush has to be turned when cleaning the teeth. The working range of the bristles is thus defined by the arc described by the ends of the bristles as they turn about the axis.

Also known are toothbrushes with a handle, a head, a plurality of bristles attached to a surface of the head and a connecting portion between the handle and the head, where the connecting portion is such that it extends from the head in the same direction as the handle and the bristles.

Disadvantageously, toothbrushes made in this way have limited access to the oral cavity and, to enable the surface defined by the free ends of the bristles to come into effective contact with the surface of the teeth, must be held at an unnatural angle by the user. This makes it difficult to reach all parts of the oral cavity which means that the surface defined by the free ends of the bristles cannot effectively brush all tooth surfaces and gum margins. Dental hygiene is thus appreciably reduced.

Moreover, this arrangement limits the working range of the bristles obliging the user to make excessive and awkward twisting movements of the wrist.

US4780924 discloses a toothbrush comprising a handle, a head and a plurality of bristles attached to a face of the head and forming a working line for the toothbrush; in which said toothbrush comprises a connecting portion located between the handle and the head and in which the working line of the bristle extends longitudinally in a direction non parallel to the principal axis (X) of the handle.

CH672052A discloses a toothbrush having a connecting portion extending from the head in a direction opposite to that of the bristles.

### Disclosure of the Invention

This invention therefore provides a toothbrush, as described in claim 1, with a handle, a head and a plurality of bristles attached to a surface of the head and forming a toothbrush working line; the toothbrush is characterised in that it has a connecting portion located between the handle and the head; and in that the handle and the connecting portion extend from the head in a direction opposite to that of the bristles defining the working line.

The toothbrush according to the invention thus makes cleaning the teeth easier and more effective.

Other advantageous characteristics of the invention are described in the other claims.

### Brief Description of the Drawings

The technical characteristics and advantages of the invention will become more apparent from the detailed description which follows, with reference to the accompanying drawings which illustrate preferred, non-limiting embodiments of the invention, and in which:
Figure 1 is a side view of a first embodiment of the toothbrush according to the invention;
Figure 2 is a side view of a second embodiment of the toothbrush;
Figure 3 is a side view of a detail of a third embodiment of the toothbrush similar in other respects to the embodiment shown in Figure 1;
Figure 4 is a side view of a detail of the handle of the toothbrush of Figure 1;
Figure 5 is a plan view of the detail of Figure 4;
Figure 6 is a side view of a fourth embodiment of the toothbrush according to the invention;
Figure 7 is a perspective view of a tongue protecting element that can be associated with the toothbrush of Figure 6;
Figure 8 is a side view of a fifth embodiment of the toothbrush not according to the invention;
Figure 9 is a perspective view of a sixth embodiment of the toothbrush according to the invention;
Figure 10 is a side view of the sixth embodiment of the toothbrush according to the invention;
Figure 11 is a plan view from below of the sixth embodiment of the toothbrush according to the invention;
Figure 12 is a plan view from above of the sixth embodiment of the toothbrush according to the invention;
Figure 13 is a perspective view of a seventh embodiment of the toothbrush according to the invention;
Figure 14 is a schematic side view of a detail of an eighth embodiment of the toothbrush not according to the invention;
Figure 15 is a plan view from above of a preferred embodiment of a head applicable to any of the toothbrushes according to the invention;
Figures 16A, 16B, 16C are front views of different embodiments of the head applicable to any of the toothbrushes according to the invention;
Figure 17 is a side view of a second power-driven embodiment of the toothbrush according to the invention;
Figure 18 is a plan view from below of the second power-driven embodiment of the toothbrush according to the invention in a first operating condition;
Figure 19 is a plan view from below of the second power-driven embodiment of the toothbrush according to the invention in a second operating condition.

### Detailed Description of the Preferred Embodiments of the Invention

With reference to the accompanying drawings, the numeral 1 denotes in its entirety a toothbrush comprising a handle 2, a connecting portion 3 connected to the handle 2, and a head 4 connected to the connecting portion 3. The head 4 comprises a plurality of bristles 5 which, preferably, as illustrated, extend in directions parallel to each other from a surface or face 4a of the head 4.

Specifically, the free ends 5a of the bristles 5 form a working line L of the toothbrush 1.

The working line defined by the ends of the bristles may form a flat working surface, as illustrated, or a working surface that is curved in a transversal direction, as described and illustrated below. More specifically, the curved shape of the working surface may be formed either by bristles extending radially from the head or by bristles extending in parallel directions but differing in length so that the ends of the bristles together form a curved surface.

Advantageously, as illustrated, the handle 2 and the connecting portion 3 extend from the head 4 in the opposite direction to that of the bristles 5 so that the head 4, having a mounting plate for the bristles 5, is spaced from the handle 2 in the direction of bristle 5 extension, thereby allowing the connecting portion 3 to be suitably angled. Thus, the toothbrush requires less effort of the user because the bristles 5 can make extended sweeping movements without the user having to twist his or her wrist excessively.

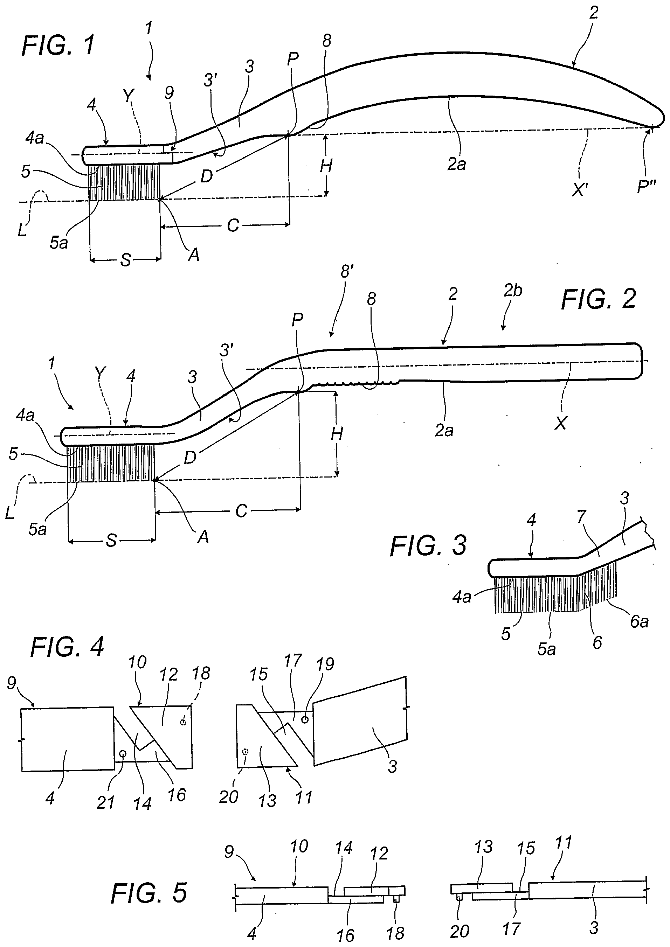

The handle may have any shape. Advantageously, however, the handle 2 has a curved ergonomic shape, as illustrated in Figure 1, with the concave part facing the working line L and with the ends PeP" of the part gripped by the user aligned along an imaginary line or longitudinal axis X' that is parallel to the working line L (Figure 1).

The handle 2 may also be straight, extending along a longitudinal axis X that is parallel to the working line L (Figure 2).

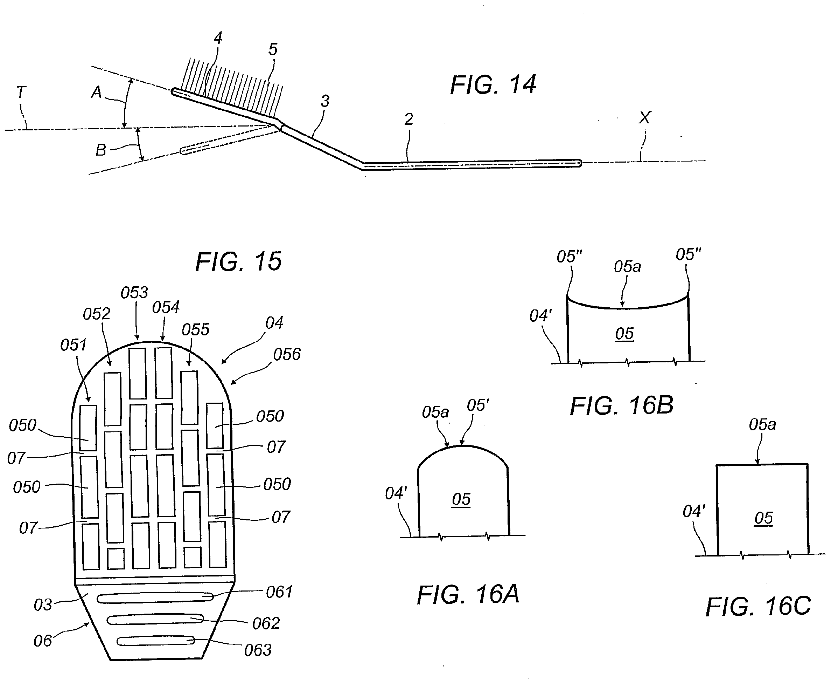

A working surface that is concave or convex in the transversal direction, as illustrated in Figures 16A and 16B, can be formed by parallel bristles arranged in longitudinal rows, where the bristles in each longitudinal row are the same in height as the other bristles in that row but different in height from the bristles in the other rows.

According to another aspect, the toothbrush head comprises a respective toothbrush bristle mounting body 4 having a principal longitudinal axis of extension (Y) passing through the centre of the transversal sections of the mounting body and defining the axis of the head which extends preferably in a direction parallel to the principal longitudinal axis (X or X') of the handle (2).

Advantageously, the connecting portion 3 extends in a linear or substantially linear direction and has a linear or substantially linear upper surface 3', that is to say, the face of it on the same side or in the same direction as the bristles 5 is linear or substantially linear. This reduces the risk of engaging the incisors while cleaning the molars. According to another advantageous aspect, the surface 3' might be concave in the direction in which the bristles 5 extend, that is to say, it would have a recessed configuration compared to the surface 3' illustrated in Figures 1 and 2.

Figure 14 shows how the head 4 not according to the invention might also be inclined upwards at an angle A or downwards at an angle B (as shown by the dashed line) with respect to an imaginary line T in the direction of principal extension of the head and parallel longitudinal axis X of the handle. The angles A and B made with the line T parallel to the handle are preferably less than or equal to 15°.

In another embodiment, auxiliary bristles 6 are applied also to a limited area 7 of the connecting portion 3 (Figure 3). The area 7 is located in the vicinity of the join between the connecting portion 3 and the head 4. Preferably, as illustrated, the auxiliary bristles 6 are parallel to and oriented in the same direction as the bristles 5, and are also preferably equal in height.

Thus, at the connecting portion 3, the auxiliary bristles 6, form a working surface 6a that extends at an angle to the working surface 5a formed by the primary bristles and, in the direction of the handle 3, the working surface 6a remains parallel to the connecting portion 3.

This arrangement of the bristles 6 on the connecting portion 3 makes it easier to effectively brush the lingual or inside part of the incisors. In particular, it is possible to clean the top and bottom lingual parts or, more specifically, the lingual walls of the teeth 45, 44, 43, 42, 41, 31, 32, 33, 34, 35, and the palatal walls of the teeth 15, 14, 13, 12, 11, 21, 22, 23, 24, 25, (that is to say, from the 2nd premolar on the right to the 2nd premolar on the left in the top and bottom jaws). These numeric designations relating to the teeth are well within the knowledge of a dental specialist and, for brevity and convenience, will not be explained in detail.

The bristles 6 might, however, also be oriented in a direction perpendicular to the surface of the connecting portion. Other orientations of the bristles 6 are also imaginable.

Further, on the side 2a of the handle 2 facing the bristles 5, there is a finger rest 8 for manipulating the handle and designed to receive the user's thumb or index finger, depending on which part of the oral cavity is being brushed. This finger rest 8 is located near a point P where the handle 2 joins the connecting portion 3.

The free ends 5a of the bristles nearest the finger rest 8 define a point A.

It is thus possible to define the distance D between the points P and A and the height H separating the point P from the working line L of the toothbrush 1. Similarly, the reference character C denotes the distance separating the point P, as projected onto the working line L, from the point A.

To improve the accessibility properties of the toothbrush, five different embodiments are provided to suit different user characteristics, as described in more detail below. These embodiments differ in terms of distance D and height H.

As a whole, the distance D may vary in a range of 4 cm to 7 cm and, preferably, 4.6 cm to 5.8 cm, whilst the height H may vary in a range of 1.7 cm to 3.5 cm and, preferably, 1.7 cm to 2.8 cm. Therefore, the distance C may vary in a range of 3.5 cm to 6.0 cm and, preferably, 4.3 cm to 5.0 cm.

Further, the length S of the bristled portion of the toothbrush, that is to say, of the working surface of the bristles, varies in a range of 1.0 cm to 3.0 cm and, preferably, 1.8 cm to 2.3 cm.

As to the height of the bristles, that is to say, the distance between the working surface 5a, and the head surface 4a from which the bristles extend, this may vary in a range of 0.5 cm to 1.5 cm, and, preferably, varies in a range of 0.7 cm to 1.3 cm.

Specifically, in an embodiment designed for a standard adult user, the distance D measures 5.5 cm and the height H 2.2 cm. The distance C measures 5.0 cm.

In another embodiment designed for users with low teeth or gum hypertrophy, the distance D measures 5.4 cm and the height H 1.7 cm. The distance C measures 5.2 cm.

In an embodiment designed for users with large mouths or teeth that are excessively inclined in a vestibular, palatal or lingual direction, or, more specifically, with pronounced lower incisors and wide, ogival palates, the distance D measures 5.8 cm and the height H 2.8 cm. The distance C measures 5.0 cm.

In yet another embodiment designed for children, the distance D measures 4.6 cm and the height H 1.7 cm. The distance C measures 4.3 cm.

Finally, in an embodiment designed for adult users with small mouths, the distance D measures 4.8 cm and the height H 2.2 cm. The distance C measures 4.3 cm.

The above measurements relate to the optimum configurations for the respective user types and the values of D, H and C indicated may vary by plus or minus 2 or 3 mm and, preferably, the values of D, H and C indicated, especially the values of H indicated, may vary by plus or minus 1 mm.

As illustrated in Figure 2, the invention also contemplates the provision of another finger rest 8', constituting a surface or means for engaging or resting one of the user's other fingers, on the side of the handle opposite that where the finger rest or surface 8 is located, said finger rest 8' being similar in all respects to the finger rest 8.

In this way, the user is encouraged to grip the toothbrush in one of the two most recommended ways, in particular, when the Bass brushing method is used, obtaining an optimum application of this method for various users, this Bass method being well known in the dental sector and, for brevity and convenience, not described in detail in this specification.

In particular, according to the Bass brushing method, considering the example of a right-handed user, when the user's thumb is placed on the finger rest 8 on the side 2a and, consequently, the user's index finger is placed on the finger rest 8' on the side 2b, the free surface of the bristles is set to brush the left-hand side of the teeth and, more specifically, the vestibular surfaces of the 2nd and 3rd quadrants and the lingual surfaces of the 1st and 4th quadrants, as well as the occlusal surfaces of the lower jaw. On the other hand, to brush the lingual surfaces of the 2nd and 3rd quadrants, the vestibular surfaces of the 1st and 4th quadrants and the occlusal surfaces of the upper jaw, the user's index finger is placed on the finger rest 8 on the side 2a and, consequently, the thumb on the finger rest 8' (side 2b). A left-handed user holds the handle in the same way when brushing the occlusal surfaces but the other way round when brushing the other tooth surfaces mentioned above. These designations relating to the teeth are well within the knowledge of a dental specialist and, for brevity and convenience, will not be explained in detail.

According to another advantageous aspect, all the embodiments described above might have a connector, not illustrated, located between the connecting portion 3 and the handle. This connector would enable the user to choose the connecting portion and toothbrush head of the size best suited to the characteristics of his or her mouth.

In another embodiment, a connector 9 is provided between the head 4 and the connecting portion 3 (Figures 4 and 5). The connector 9 enables the toothbrush head 4 to be changed when worn.

Further, to avoid damage to the interior of the user's mouth, the connector might be designed in such a way as to become loose, without being disconnected altogether, if the user applies too much pressure on the toothbrush 1.

Whatever the case, the connector 9 consists of a first hook 10 fixedly connected to one end of the head 4 and a second hook 11 connected to one end of the connecting portion 3. The hooks 10, 11 have matching shapes and are designed to slot into each other.

Thus, each hook 10, 11 consists of a suitably shaped plate 12, 13 and a respective slot 14, 15 shaped to match the plate 12, 13.

The plates 12, 13 of the first hook 10 and of the second hook 11 are connected to the head 4 and to the connecting portion 3 of the toothbrush 1 by a first and a second protrusion 16 and 17, respectively. The protrusions 16, 17 are shaped in such a way that, when hooked, they are positioned side by side on the same surface, without interfering with each other.

During the hooking action, the plate 12 of the first hook 10 is positioned inside the slot 15 of the second hook 11, while the plate 13 of the second hook 11 is positioned inside the slot 14 of the first hook 10. The dimensions of the plates 12, 13 and of the slots 14, 15 are such as to allow a reciprocal fit with the minimum interference to guarantee a secure hold of the connector 9.

There may also be at least one first pin 18 on the plate 12 of the first hook 10 designed to fit into a first hole 19 made in the second protrusion 17 on the second hook 11. The coupling between the first pin 18 and the first hole 19 further strengthens the connector 9.

If necessary, there may also be a second pin 20 on the plate 13 of the second hook 11 designed to fit into a second hole 21 made in the first protrusion 16 on the first hook 10.

The technical characteristics of the toothbrush according to the invention facilitate accessibility to the user's oral cavity.

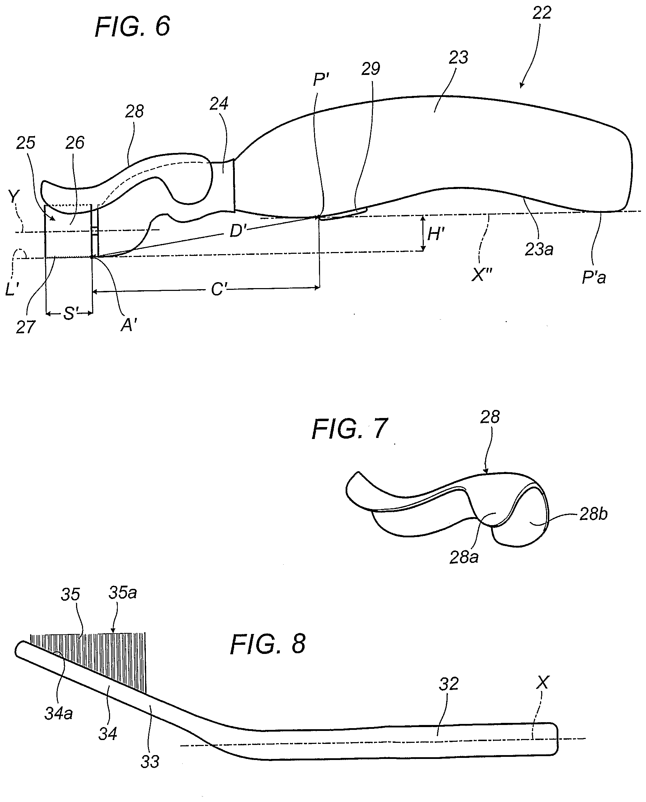

Figure 6 illustrates an electric toothbrush 22 comprising a handle 23 joined by a connecting portion 24 to a head 25.

The free end of the head 25 is connected to a roller 26 that is rotatable about a longitudinal axis Y and associated with suitable motor means, not illustrated. The roller 26 mounts a plurality of bristles 27 arranged radially on its lateral surface in such a way that the bristles are perpendicular to the lateral surface of the roller 26.

The roller 26 is positioned in such a way that the bristles 27 define a working line L' lying on the side of the roller 26 longitudinal axis Y opposite the handle 23 and opposite the connecting portion 24.

Advantageously, as illustrated, the axis of rotation Y of the roller extends in a direction substantially parallel to the handle 23. Thus, the handle 23 may be held in such a way that the ends P' and P'a are engaged by the user's hand along an imaginary line X" that is parallel to the working line L' or to the axis of rotation Y.

Advantageously, the bristle portion located on the opposite side of the working line L' is covered by a cap 28 which prevents the bristles 27 from coming into contact with the parts of the oral cavity that are not teeth.

The cap 28 is removably associated with the toothbrush so that it can be detached from the roller 26, allowing access to the latter for example when it needs to be removed.

In one embodiment of it, illustrated in Figure 7, the tongue protecting cap 28 comprises a first and a second flexible flap 28a, 28b for engaging the respective circular portion of the handle 23, as shown in Figure 6.

Like the embodiments described above, a point P' can be identified on the side 23a of the handle 23 facing the working line L', close to the point where the user's thumb or index finger comes into contact with the toothbrush 22.

Another point A' can be identified on the working line L' close to the free ends of the bristles 27 nearest the handle 23.

It is thus possible to define the distance D' between the points P' and A' and the height H' separating the point P' from the working line L'. Finally, the reference character C' denotes the distance separating the point P', as projected onto the working surface L', from the point A'.

This electric toothbrush may have the same dimensions as the toothbrush embodiments described above. Specifically, in this embodiment, which is designed for a standard adult user, the distance D' measures 5.5 cm and the height H 2.2 cm. The distance C' measures 5.0 cm.

Further, the length S' of the bristled portion of the roller that revolves about an axis parallel to the handle varies in a range of 0.5 cm to 2.0 cm.

In particular, for a child, the length S' varies in a range of 0.5 to 1.3 cm, while for an adult, it varies preferably in a range of 0.7 to 1.5 cm.

The height of the bristles varies preferably in a range of 2 to 6 mm.

Inside the handle 23 there is a cavity (not illustrated in the drawings) designed to house the above mentioned motor means which preferably comprise an electric motor (not illustrated), transmission means (not illustrated) that connect the motor to the roller 26, between the inclined connecting portion 24 and batteries (not illustrated) used to power the motor.

A button 29 located on the surface 23a of the handle 23 facing the working line L' is used to operate the toothbrush 22.

Whenever selected by the user, the electric motor imparts to the roller 26 a rotational motion in either a clockwise or an anticlockwise direction: that means the brushing action of the bristles 27 can be controlled so it is always from the gums to the ends of the teeth.

If necessary, the head 25 and the connecting portion 24 can be separated from the handle 23 so that they can be changed.

In yet another embodiment of the toothbrush not according to the invention, illustrated in Figure 8, the head 34 with the bristles 35 is made directly on the extension of the connecting portion 33 and the face 34a of the head from which the bristles 35 extend is inclined at an angle to the handle 32 and to the surface 35a formed by the free ends of the bristles 35. As illustrated, in this embodiment, the bristles differ in height so as to form a working surface 35a which is parallel, or substantially parallel, to the handle axis X and which is also preferably such that its dimensions are similar to the preferred dimensions H, C and D indicated above for the other preferred embodiments.

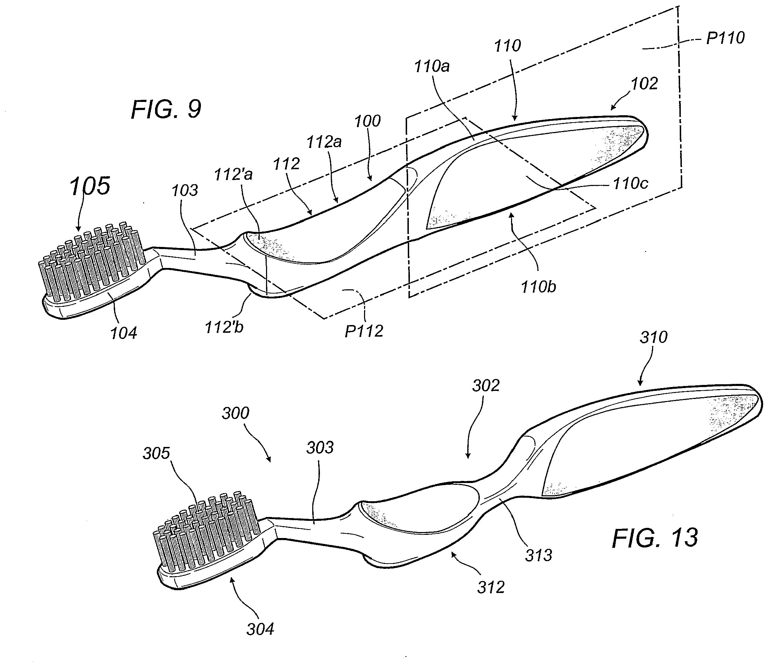

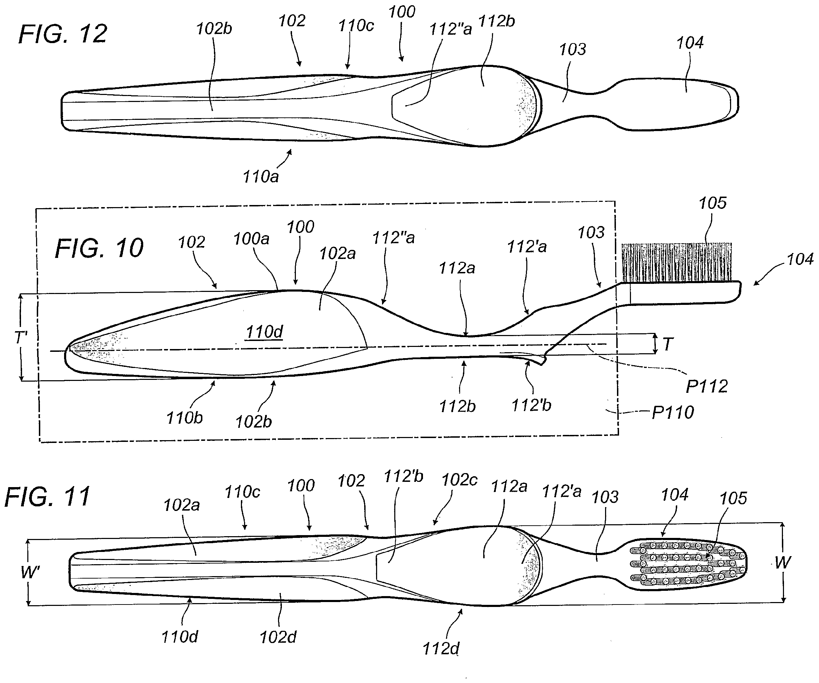

A sixth preferred embodiment of the toothbrush is illustrated in Figures 9 to 12.

This sixth embodiment of the toothbrush, denoted in its entirety by the numeral 100, comprises a handle 102, which in turn comprises an upper part 102a, on the side on which the bristles extend from the head 104, a lower part 102b, on the side opposite the one on which the bristles 105 extend from the head 104, and opposite side or lateral parts 102c, 102d.

As illustrated, like the other embodiments, between the toothbrush head 104 and the handle there is a connecting portion 103 that extends from the head or plate 104 in the direction opposite the direction in which the bristles 105 extend.

The handle 102 comprises an elongated portion 110, extending lengthways away from, or opposite to, the head 104 and around which the user's fingers can be wrapped, and an intermediate portion 112, extending between the elongated portion 110 and the working head 104 and constituting means on which at least one of the fingers, normally the user's thumb or index finger, can be rested.

The drawings also show how the intermediate portion 112 extends in a transversal direction according to a mid plane P112 that is perpendicular to the mid plane P110 in which the elongated portion 110 extends.

Advantageously, the width W of the intermediate engagement portion 112 is greater than the width W' of the elongated portion 110.

In this way, a wide and convenient rest is formed for the user's thumb or index finger, allowing an easier and more effective tooth brushing action, requiring less pressure and therefore less strain on the hand.

In particular, the intermediate engagement portion has a top surface 112a that faces upwards in the direction in which the bristles 105 extend, and an opposite engagement surface 112b that faces downwards in the opposite direction to that in which the bristles 105 extend, each of the portions 112a, 112b having, in the transversal direction, a generally planar form perpendicular to the handle's plane of symmetry, denoted by the reference label P110 in Figure 9.

Further, the lower engagement surface 102b also has a substantially planar form in the longitudinal direction, whilst the upper engagement surface 112a has, in the longitudinal direction, is of upwardly concave arcuate form creating a convenient thumb rest that facilitates manipulation.

It will be understood, however that, although this embodiment is especially preferred, a handle is also imaginable wherein the lower engagement portion extends in longitudinally concave fashion in the same way as the upper engagement surface or, vice versa, wherein the upper engagement surface extends in a substantially linear longitudinal direction in the same way as the lower engagement surface.

Also, as illustrated, the sides of the intermediate portion 102, denoted by the reference labels 102c and 102d, are of arcuate form that is convex towards the outside of the handle 102.

This creates a wide portion that the user can conveniently and securely hold between two fingers.

According to another advantageous aspect, the handle 102 has an elongated portion 110 whose maximum height T' is greater than the respective width W'.

According to yet another advantageous aspect, the handle 102 has an intermediate elongated portion 112 whose width W is greater than the respective height or thickness T.

As illustrated, the height T' of the end portion 110 is greater than the height or thickness T of the intermediate engagement rest portion 112.

Specifically, the intermediate engagement portion 112 has a height or thickness T of between 3 mm and 7 mm and a width W of between 9 mm and 25 mm, whilst the elongated engagement portion 110 has a height or thickness T' of between 17 mm and 39 mm and a width W of between 9 mm and 17 mm.

As illustrated, the intermediate portion 112 has an upper edge 112a of arcuate form which is concave in the upward direction, that is to say, in the direction in which the bristles extend.

Further, the lower edge 110b of the elongated portion 110 is substantially linear and aligned with the lower engagement portion 112b of the intermediate portion 112.

Also, as illustrated, the sides 110c, 110d of the elongated portion 110 have a rounded shape that is convex towards the outside of the handle 102.

This provides an end grip that is easy to hold securely between the fingers and palm of the hand so that the toothbrush does not perform unwanted rotations during the brushing action.

In practice, the elongated portion 110 around which the fingers can be wrapped extends in a direction perpendicular to the transversal direction in which the intermediate rest portion 112 extends.

As illustrated, the upper rest surface 112a has, on the side nearest the head 104, an upwardly extending part 112'a forming a surface for stopping the thumb or index finger and, on the opposite longitudinal side an upwardly extending transient portion 112"a that blends into the upper edge 110a of the elongated portion 110.

The lower rest surface 112b in turn has, on the side facing the head 104, a downwardly extending part 112'b forming a surface for stopping one of the user's fingers, normally the index finger or thumb.

As illustrated, the stop surface 112'b of the lower engagement surface is substantially aligned, in the vertical or perpendicular direction, with the stop surface 112'a of the upper engagement portion 112a.

Further, the elongated portion 110a has, at the end furthest from the head 104, a tapered shape converging towards the tip.

A seventh preferred embodiment of the toothbrush is illustrated in Figure 13.

This seventh preferred embodiment of the toothbrush, labelled 300 as a whole, comprises a handle 302 and, between the toothbrush head 304 and the grip portion of the handle, a connecting portion 303 that extends from the head 304 in the direction opposite to the direction in which the bristles 305 extend, in the same way as the other preferred embodiment already described.

The handle 302 comprises an elongated portion 310, extending lengthways away from, or opposite to, the head 304 and which can be wrapped between the fingers and palm of the user's hand, and an intermediate portion 312, extending between the elongated portion 310 and the working head 304 and constituting means on which at least one of the user's fingers can be rested, which can preferably be held between the user's thumb and index finger.

Advantageously, the intermediate engagement portion 312 is joined to the elongated portion 310 by a flexible connection defined by a narrowing portion 313, whose diameter or width and, possibly also height, is less than that of the intermediate portion 312 and that of the elongated portion 310.

The handle of this toothbrush is made preferably of a flexible plastic material. This seventh preferred embodiment of the toothbrush, except for the flexible connection 313 between the handle portions 310 and 312, is similar in all other respect to the sixth preferred embodiment and, for brevity and convenience, will not be described in detail.

According to another aspect, the bristled heads 4, 104, 304, when viewed from above, have a rectangular or elliptic shape with a width of between 7 mm and 15 mm, preferably 14 mm, and a length of between 19 mm and 25 mm, preferably between 21 mm and 23 mm. Also, the thickness or height of the head is 4 or 5 mm.

The bristles on the head are preferably arranged in a plurality of parallel rows. Two to six rows are preferable. The arrangement with six rows is illustrated in Figure 15, where the rows are labelled 051, 052, 053, 054, 055, 056. The numeral 04 in Figure 15 denotes the head.

Advantageously, as illustrated, each row of bristles 051, 052, 053, 054, 055, 056 comprises elongated groups or tufts each comprising a plurality of bristles arranged in rectangular fashion with the long side extending in the longitudinal direction of the head. Each row of bristles comprises a plurality of groups, or tufts, 050, separated by a small space 07. Advantageously, the tufts are arranged in alternating fashion so that the tufts 050 of one row are aligned, in the transversal direction, with the separating spaces 07 of the adjacent row.

It is also imaginable that the bristles of the lateral rows 051, 052, 055, 056 are softer than those of the central rows 053, 054. Thus, when brushing the teeth according to the Bass method, the lateral rows come mainly into contact with the gums and the fact that they are softer prevents damage to the gums and instead produces a massaging action with an oxygenating effect on the gum tissue.

According to another imaginable arrangement, bristle rows 051, 052, 053, 054, 056, of different lengths in the longitudinal direction might be provided, where each row instead of being divided into groups or tufts like those shown in Figure 15, is continuous, that is to say, does not have the bristle-free spaces shown in Figure 15.

Figure 15 also shows how, preferably, the bristles 06 on the connecting portion 03, similar to the connecting portions 3, 103, 203, 303 described above, might be arranged in a plurality of rows 061, 062, 063 extending transversally to the principal direction in which the head 04 extends. However, any other suitable arrangement for the bristles on the connecting portion might also be used.

As illustrated schematically in Figures 16A, 16B and 16C, the bristles may be arranged transversally in any desired configuration.

In particular, the bristles might be transversally arranged in a "hogback" configuration, as shown in Figure 16A, where the working surface 05a of the bristles 05 has an upwardly convex shape, that is to say, convex in the direction in which the bristles extend from the head 04', this form being especially suitable for brushing the teeth according to the Bass method. It will be understood that in a hogback configuration of this type, the preferred dimensions indicated above refer to the central area 05' furthest away from the bristle mounting head.

Also, the bristles might be transversally arranged as shown in Figure 16B, where their working surface 05a has an upwardly concave shape, that is to say, forms a curve whose concavity is in the direction in which the bristles extend from the head 04'. It will be understood that in this recessed configuration, the preferred dimensions indicated above refer to the lateral areas 05", 05" or to the bristle rows at the side, that is to say, to the bristles whose ends are furthest away from the bristle mounting head 04'.

The bristles might also be transversally arranged in such way as to form a flat surface 05a as in the toothbrush embodiments described above and as shown Figure 16C where the reference characters used to denote the bristles 05 and the head 04' are the same as those used in Figures 16A and 16B.

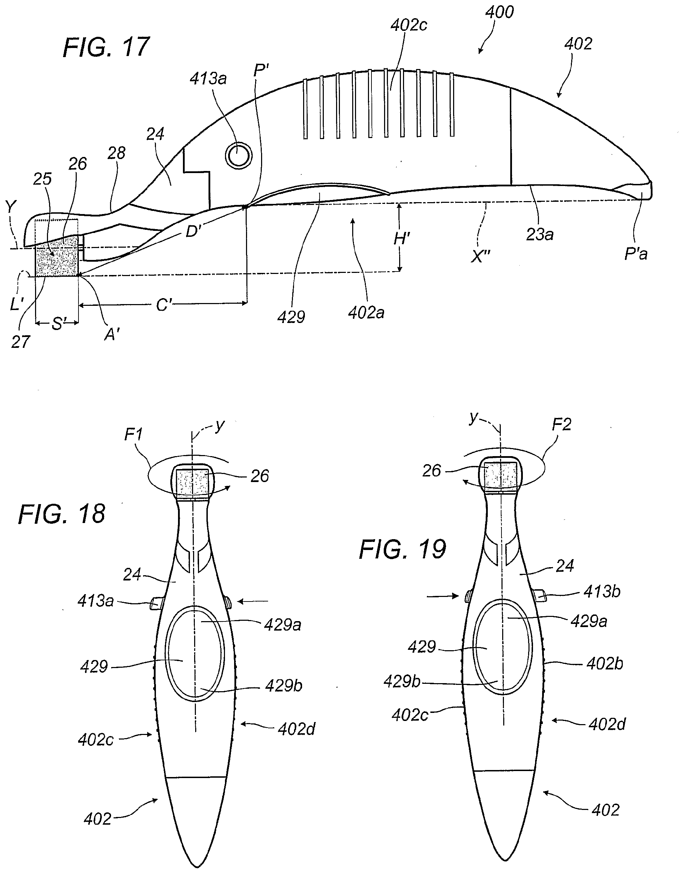

Figures 17 to 19 illustrate another toothbrush embodiment 400 constituting a second power-driven embodiment of the toothbrush according to the invention. The characteristics of this embodiment are substantially the same as those of the toothbrush of Figure 6, these characteristics being denoted by the same numeric references and not described again in detail.

This second power-driven embodiment of the toothbrush comprises a first pushbutton to select rotation of the bristle head in one direction and a second pushbutton to select rotation of the bristle head 26 in the opposite direction.

These pushbutton control means consist of a first and a second pushbutton 413a, 413b mounted on opposite lateral or side faces 402c, 402d of the handle. They can be pressed alternately to cause the bristle head 26 to turn in the direction indicated by the arrow F1 in Figure 18 or in the opposite direction, indicated by the arrow F2 in Figure 19.

This second power-driven embodiment of the toothbrush comprises another pushbutton 429 to start the bristle head turning in a default direction, that is to say, in the direction previously selected using pushbutton 413a or 413b.

The pushbutton control 429 is mounted on the face 402a on the same side as the head and comprises a first end 429a that can be pressed to start the head and a second end 429b that can be pressed to stop the head.

Thus provided is a toothbrush that is effective and easy to use and is particularly suitable for brushing the teeth according to the Bass method, a tooth brushing method well known in the trade.

This toothbrush and in particular the handle of the toothbrush is made of a plastic material, preferably a flexible plastic material.

The invention described has evident industrial applications and can be modified and adapted without thereby departing from the scope of the invention as disclosed in the appended claims. Moreover, all details of the invention may be substituted by technically equivalent elements.

## Claims

1. A toothbrush comprising a handle (2, 23), a head (4, 25) and a plurality of bristles (5, 26) attached to a face (4a) of the head (4); whereby the free ends (5a) of the bristles (5) form a working line (L, L') of the toothbrush (1) and whereby the working line defined by the ends of the bristles may form a flat working surface or a working surface that is curved in a transversal direction; said toothbrush comprising a connecting portion (3, 24) located between the handle (2, 23) and the head (4, 25), with the handle (2, 23) and the connecting portion (3, 24) which extend from the head (4, 25) in a direction opposite to that of the bristles (5, 26) defining said working line (L, L'); said handle (2) also extending along a principal longitudinal axis (X) and the toothbrush working line (L) extending longitudinally in a direction parallel to the principal axis (X) of the handle (2); the handle (2) further comprising a finger rest (8), located on the same side (2a) of the handle (2) as the bristles (5) on which a user can engage a finger when holding the handle (2), said connecting portion (3) extending in a linear or substantially linear direction and having an upper surface (3'), that is linear or substantially linear; the toothbrush being **characterised in that** the the height (H) between one end point (P) of the finger rest (8) and the working line (L) of the toothbrush (1) varies in a range of 1.7 cm to 3.5 cm.

2. The toothbrush according to claim 1, **characterised in that** the connecting portion (3) has an upper surface (3'), that is concave in the direction of the bristles.

3. The toothbrush according to either of the foregoing claims, **characterised in that** the distance (D) between one end point (P) of the finger rest (8) and a point (A), defined by the free ends of the bristles (5) nearest the finger rest (8), varies in a range of 4.0 cm to 7.0 cm.

4. The toothbrush according according to claim 3, **characterised in that** the distance (D) between one end point (P) of the finger rest (8) and a point (A), defined by the free ends of the bristles (5) nearest the finger rest (8), varies in a range of 4.6 cm to 5.8 cm.

5. The toothbrush according to any of the foregoing claims, **characterised in that** the height (H) between the point (P) and the working line (L) of the toothbrush (1) varies in a range of 1.7 cm to 2.8 cm.

6. The toothbrush according to any of the foregoing claims, **characterised in that** the length (S) of the working surface (5a) of the bristles varies in a range of 1.0 cm to 3.0 cm and, preferably, 1.8 cm to 2.3 cm.

7. The toothbrush according to any of the foregoing claims, **characterised in that**, ideally, the distance (D) measures 4.6 cm and the height (H) 1.7 cm, plus or minus 2 or 3 mm and, preferably, plus or minus 1 mm.

8. The toothbrush according to any of the foregoing claims from 1 to 6, **characterised in that**, ideally, the distance (D) measures 4.8 cm and the height (H) 2.2 cm, plus or minus 2 or 3 mm and, preferably, plus or minus 1 mm.

9. The toothbrush according to any of the foregoing claims from 1 to 6, **characterised in that**, ideally, the distance (D) measures 5.4 cm and the height (H) 1.7 cm, plus or minus 2 or 3 mm and, preferably, plus or minus 1 mm.

10. The toothbrush according to any of the foregoing claims from 1 to 6, **characterised in that**, ideally, the distance (D) measures 5.5 cm and the height (H) 2.2 cm, plus or minus 2 or 3 mm and, preferably, plus or minus 1 mm.

11. The toothbrush according to any of the foregoing claims from 1 to 6, **characterised in that**, ideally, the distance (D) measures 5.8 cm and the height (H) 2.8 cm, plus or minus 2 or 3 mm and, preferably, plus or minus 1 mm.

12. The toothbrush according to any of the foregoing claims, **characterised in that** the handle (2) is curved with concavity facing the working line (L).

13. The toothbrush according to any of the foregoing claims, **characterised in that** the head (4) extends along a principal longitudinal axis (Y) that is parallel or substantially parallel to the principal longitudinal axis (X or X') of the handle (2).

14. The toothbrush according to the foregoing claims, **characterised in that** the connecting portion (3) comprises an area (7), located near the head (4) and having auxiliary bristles (6).

15. The toothbrush according to claim 14, **characterised in that** the auxiliary bristles (6) on the connecting portion (3) form a working surface (6a) that extends at an angle to the plane defined by the working surface (5a) of the primary bristles.

16. The toothbrush according to claim 14 or 15, **characterised in that** the auxiliary bristles (6) on the connecting portion (3) form a working surface (6a) that extends in a direction parallel to the surface of the connecting portion (3).

17. The toothbrush according to any of the foregoing claims, **characterised in that** it comprises a connector (9) for connecting the head (4) to the main body of the toothbrush.

18. The toothbrush according to claim 17, **characterised in that** it comprises a connector (9) located between the head (4) and the connecting portion (3) to enable the head (4) to be changed.

19. The toothbrush according to claim 17, **characterised in that** it comprises a connector located between the connecting portion (3) and the handle (4).

20. The toothbrush according to any of the foregoing claims from 17 to 19, **characterised in that** the connector (9) comprises a first hook (10) fixedly connected to one end of the head (4) and a second hook (11) connected to one end of the connecting portion (3); the hooks (10, 11) being designed to be detachably joined to each other.

21. The toothbrush according to claim 20, **characterised in that** the hooks (10, 11) are identical.

22. The toothbrush according to claim 20 or 21, **characterised in that** each hook (10, 11) comprises a suitably shaped plate (12, 13) and a respective slot (14, 15) where the slot (14) of the first hook (10) is shaped to match the plate (13) of the second hook (11), while the slot (15) of the second hook (11) is shaped to match the plate (12) of the first hook (10).

23. The toothbrush according to claim 22, **characterised in that** each plate (12, 13) is connected to the head (4) or to the connecting portion (3) respectively by a first flat protrusion (16) and a second flat protrusion (17) located under each slot (14, 15); said protrusions (16, 17) being designed to be positioned side by side.

24. The toothbrush according to claim 23, **characterised in that** the plate (12) of the first hook (10) comprises a first pin (18) which, during the hooking action, fits into a first hole (19) made in the second protrusion (17) of the second hook (11).

25. The toothbrush according to claim 24, **characterised in that** the first plate (12) of the second hook (11) comprises a second pin (20) which, during the hooking action, fits into a second hole (21) made in the first protrusion (16) of the first hook (10).

26. The toothbrush according to any of the foregoing claims from 17 to 25, **characterised in that** the connector is designed to become loose without being disconnected altogether.

27. The toothbrush according to any of the foregoing claims, **characterised in that** it comprises a head (25) equipped with a roller (26), rotatable about an axis (Y) and having a plurality of bristles (27) attached perpendicularly to the lateral surface of the roller (26) and forming a working line (L'); and motor means designed to rotate the roller (26) about its axis (Y).

28. The toothbrush according to claim 27, **characterised in that** the axis of rotation (Y) of the roller extends in a direction substantially parallel to the principal direction (X") in which the toothbrush handle extends.

29. The toothbrush according to claim 27 or 28, **characterised in that** the length (S') of the working surface of the bristles on the roller varies in a range from 0.5 cm to 2.1 cm and preferably from 0.5 cm to 1.5 cm.

30. The toothbrush according to any of the foregoing claims from 28 to 30, **characterised in that** the motor means comprise an electric motor and transmission means connecting the motor to the roller (26).

31. The toothbrush according to any of the foregoing claims from 27 to 30, **characterised in that** the motor means are housed in a cavity formed in the handle (23).

32. The toothbrush according to any of the foregoing claims from 27 to 31, **characterised in that** the bristle portion located on the opposite side of the working line (L') is covered by a cap (28).

33. The toothbrush according to claim 32, **characterised in that** the cap (28) is associated with the toothbrush removably.

34. The toothbrush according to any of the foregoing claims, **characterised in that** the head (34) that mounts the bristles (35) is made directly on the extension of the connecting portion (33).

35. The toothbrush according to any of the foregoing claims, **characterised in that** the face (34a) of the head from which the bristles (35) extend is inclined at an angle to the handle (32) and/or to the surface (35a) defined by the free ends of the bristles (35).

36. The toothbrush according to any of the foregoing, **characterised in that** the bristles differ in height in such a way as to form a working surface (35a) that is parallel, or substantially parallel, to the handle axis (X).

37. The toothbrush according to any of the foregoing claims, **characterised in that** the handle (102) comprises an elongated portion (110) which extends lengthways away from the head (104) and which is designed to be gripped by the user's fingers, and an intermediate engagement portion (112), located between the elongated portion (110) and the working head (104), on which at least one of the user's fingers can be rested, where the width (W) of the intermediate engagement portion (112) is greater than the width (W') of the elongated portion (110).

38. The toothbrush according to any of the foregoing claims, **characterised in that** the handle (102) comprises an elongated portion (110) which extends lengthways away from the head (104) and which is designed to be gripped by the user's fingers, and an intermediate engagement portion (112), located between the elongated portion (110) and the working head (104), on which at least one of the user's fingers can be rested, where the intermediate engagement portion (112) comprises an engagement surface (112a) which is located on the same side as the bristles and on which one of the user's fingers can be rested.

39. The toothbrush according to any of the foregoing claims, **characterised in that** the handle (102) comprises an elongated portion (110) which extends lengthways away from the head (104) and which is designed to be gripped by the user's fingers, and an intermediate engagement portion (112), located between the elongated portion (110) and the working head (104), on which at least one of the user's fingers can be rested, where the intermediate engagement portion (112) comprises an engagement surface (112b) which is located on the side opposite the bristles and on which one of the user's fingers can be rested.

40. The toothbrush according to any of the foregoing claims, **characterised in that** the handle (102) comprises an elongated portion (110) which extends lengthways away from the head (104) and which is designed to be gripped by the user's fingers, and an intermediate engagement portion (112), located between the elongated portion (110) and the working head (104), on which at least one of the user's fingers can be rested, where the intermediate engagement portion (112) comprises first and second, upper and lower, opposite engagement surfaces (112a, 112b) on which respective fingers can be rested by the user.

41. The toothbrush according to any of the foregoing claims, **characterised in that** each engagement surface (112a, 112b) has, in the transversal direction, a generally planar form.

42. The toothbrush according to any of the foregoing claims, **characterised in that** an intermediate engagement portion (112) has sides (112c, 112d) of arcuate form.

43. The toothbrush according to any of the foregoing claims, **characterised in that** an intermediate engagement portion (112) comprises an upper engagement surface (112a) which, in the longitudinal direction, has an arcuate form.

44. The toothbrush according to any of the foregoing claims, **characterised in that** an intermediate engagement portion (112) comprises a lower engagement surface (112b) which, in the longitudinal direction, has a generally planar form.

45. The toothbrush according to any of the foregoing claims, **characterised in that** an intermediate engagement portion (112) has a height or thickness (T) which varies in a range of 3 mm to 7 mm.

46. The toothbrush according to any of the foregoing claims, **characterised in that** an elongated engagement portion (110) around which the fingers can be wrapped has a height or thickness (T') of between 17 mm and 39 mm.

47. The toothbrush according to any of the foregoing claims, **characterised in that** the handle (102) comprises an elongated portion (110) extending lengthways away from the head (104) and designed to be gripped by the user's fingers, and whose height (T') is greater than its width (W').

48. The toothbrush according to any of the foregoing, **characterised in that** the handle (102) comprises an elongated portion (110) extending lengthways away from the head (104) and designed to be gripped by the user's fingers and whose height (T') is greater than the height (T) of a respective intermediate portion (112) located between the elongated portion (110) and the working head (104), on which at least one of the user's fingers can be rested.

49. The toothbrush according to any of the foregoing claims, **characterised in that** an intermediate engagement portion (112) has a width (W) that is greater than the respective height (T).

50. The toothbrush according to any of the foregoing claims, **characterised in that** the handle (102) comprises an elongated portion (110) extending lengthways away from the head (104) and designed to be gripped by the user's fingers, and whose height (T') is substantially the same as the width (W) of the intermediate engagement portion (112).

51. The toothbrush according to any of the foregoing claims, **characterised in that** the handle (102) comprises an elongated portion (110) extending lengthways away from the head (104) and designed to be gripped by the user's fingers, and having an edge (110a) on the side of the bristles that is of arcuate form concave in the direction of the bristles.

52. The toothbrush according to any of the foregoing claims, **characterised in that** the handle (102) comprises an elongated portion (110) extending lengthways away from the head (104) and designed to be gripped by the user's fingers, and having an edge (110b) on the side opposite the bristles that is of substantially linear form.

53. The toothbrush according to any of the foregoing claims, **characterised in that** the intermediate engagement portion (112) comprises a lower engagement surface (112b) that is substantially aligned with the lower edge (110b) of the elongated portion (110).

54. The toothbrush according to any of the foregoing claims, **characterised in that** an elongated portion (110) has rounded sides (110c, 110d).

55. The toothbrush according to any of the foregoing claims, **characterised in that** the handle (102) comprises an elongated portion (110) which extends lengthways away from the head (104) and which is designed to be gripped by the user's fingers, and an intermediate portion (112, located between the elongated portion (110) and the working head (104), on which at least one of the user's fingers can be rested, where said two portions extend in directions perpendicular to each other.

56. The toothbrush according to any of the foregoing claims, **characterised in that** the handle (202) comprises an elongated portion (310) which extends lengthways away from the head (104) and which is designed to be gripped by the user's fingers, and an intermediate portion (312) located between the elongated portion (310) and the working head (304), on which at least one of the user's fingers can be rested, where said intermediate engagement portion is mobile relative to the elongated portion (310).

57. The toothbrush according to claim 56, **characterised in that** the intermediate engagement portion (312) is joined to the elongated portion (310) by a flexible connection.

58. The toothbrush according to claim 57, **characterised in that** the intermediate engagement portion (312) is joined to the elongated portion (310) by a narrowing portion.

59. The toothbrush according to any of the foregoing claims, **characterised in that** the head (4) is inclined upwards or downwards relative the imaginary line (T) parallel to the handle's longitudinal axis (X) at an angle (A or B), which is preferably less than or equal to 15°.

60. The toothbrush according to any of the foregoing claims, **characterised in that** the bristle mounting head is rectangular or elliptic in shape, with a width of between 7 mm and 15 mm, preferably 14 mm, length of between 19 mm and 25 mm, preferably between 21 mm and 23 mm, and thickness measuring 4 or 5 mm.

61. The toothbrush according to any of the foregoing claims, **characterised in that** the bristles on the toothbrush head are arranged preferably in a plurality of parallel rows.

62. The toothbrush according to claim 61, **characterised in that** the bristles on the toothbrush head are arranged in a plurality of parallel rows, preferably from two to six rows (051, 052, 053, 054, 055, 056).

63. The toothbrush according to claim 61 or 62, **characterised in that** each row of bristles (051, 052, 053, 054, 055, 056) comprises respective groups of bristles (05') separated by a small space (07); and **in that** the groups of bristles (05') are arranged in alternating fashion so that those of one row are aligned, in the transversal direction, with the separating spaces (07) of the adjacent row.

64. The toothbrush according to any of the foregoing claims from 62 to 64, **characterised in that** the bristles of the lateral rows (051, 052, 055, 056) are softer than those of the central rows (053, 054).

65. The toothbrush according to claim 14, **characterised in that** the bristles (06) on the connecting portion (03) comprise a plurality of parallel rows (061, 062, 063) extending transversally to the principal direction in which the head (04) extends.

66. The toothbrush according to claim 27, **characterised in that** the toothbrush comprises pushbutton control means (413a, 413b) to enable or select the direction of rotation of the bristle mounting head.

67. The toothbrush according to claim 66, **characterised in that** the pushbutton control means (413a, 413b) are mounted on opposite faces of the toothbrush handle.

68. The toothbrush according to claim 27, **characterised in that** the toothbrush comprises pushbutton control means (29, 429) to start turning the bristle mounting head.

69. The toothbrush according to claim 68, **characterised in that** the pushbutton control means (29, 429) to start turning the bristle mounting head are located on the side of the handle nearest the head (26).

70. The toothbrush according to any of the foregoing claims, **characterised in that** the handle is made of a plastic material.

71. The toothbrush according to any of the foregoing claims, **characterised in that** the handle is made of a flexible material.

## Patentansprüche

1. Zahnbürste umfassend einen Griff (2, 23), einen Kopf (4, 25) und eine Vielzahl von Borsten (5, 26), die an einer Stirnfläche (4a) des Kopfes (4) befestigt sind; wobei die freien Enden (5a) der Borsten (5) eine Arbeitslinie (L, L') der Zahnbürste (1) bilden und wobei die durch die Enden der Borsten definierte Arbeitslinie eine flache Arbeitsfläche oder eine Arbeitsfläche bilden kann, die in einer Querrichtung gekrümmt ist; wobei die Zahnbürste einen zwischen dem Griff (2, 23) und dem Kopf (4, 25) angeordneten Verbindungsabschnitt (3, 24) mit dem Griff (2, 23) und dem Verbindungsabschnitt (3, 24) umfasst, die sich vom Kopf (4, 25) in einer Richtung entgegengesetzt zu der der Arbeitslinie (L, L') definierenden Borsten (5, 26) erstrecken; wobei der Griff (2) sich auch entlang einer Hauptlängsachse (X) erstreckt und die Zahnbürstenarbeitslinie (L) sich in Längsrichtung in einer Richtung parallel zur Hauptachse (X) des Griffs (2) erstreckt; wobei der Griff (2) ferner eine auf der gleichen Seite (2a) des Griffs (2) wie die Borsten (5) liegende Fingerauflage (8) umfasst, an die ein Benutzer beim Halten des Griffs (2) mit einem Finger in Eingriff kommen kann, wobei der Verbindungsabschnitt (3) sich in einer linearen oder im wesentlichen linearen Richtung erstreckt und eine Oberseite (3') aufweist, die linear oder im wesentlichen linear ist; wobei die Zahnbürste **dadurch gekennzeichnet ist, dass** die Höhe (H) zwischen einem Endpunkt (P) der Fingerauflage (8) und der Arbeitslinie (L) der Zahnbürste (1) in einem Bereich von 1,7 cm bis 3,5 cm variiert.

2. Zahnbürste nach Anspruch 1, **dadurch gekennzeichnet, dass** der Verbindungsabschnitt (3) eine in Richtung der Borsten konkave Oberseite (3') aufweist.

3. Zahnbürste nach einem der vorhergehenden Ansprüche, **dadurch gekennzeichnet, dass** der Abstand (D) zwischen einem Endpunkt (P) der Fingerauflage (8) und einem Punkt (A), der durch die freien Enden der der Fingerauflage (8) am nächsten liegenden Borsten (5) definiert ist, in einem Bereich von 4,0 cm bis 7,0 cm variiert.

4. Zahnbürste nach Anspruch 3, **dadurch gekennzeichnet, dass** der Abstand (D) zwischen einem Endpunkt (P) der Fingerauflage (8) und einem Punkt (A), der durch die freien Enden der der Fingerauflage (8) am nächsten liegenden Borsten (5) definiert ist, in einem Bereich von 4,6 cm bis 5,8 cm variiert.

5. Zahnbürste nach einem der vorhergehenden Ansprüche, **dadurch gekennzeichnet, dass** die Höhe (H) zwischen dem Punkt (P) und der Arbeitslinie (L) der Zahnbürste (1) in einem Bereich von 1,7 cm bis 2,8 cm variiert.

6. Zahnbürste nach einem der vorhergehenden Ansprüche, **dadurch gekennzeichnet, dass** die Länge (S) der Arbeitsfläche (5a) der Borsten in einem Bereich von 1,0 cm bis 3,0 cm und vorzugsweise von 1,8 cm bis 2,3 cm variiert.

7. Zahnbürste nach einem der vorhergehenden Ansprüche, **dadurch gekennzeichnet, dass** idealerweise der Abstand (D) 4,6 cm und die Höhe (H) 1,7 cm plus oder minus 2 oder 3 mm und vorzugsweise plus oder minus 1 mm betragen.

8. Zahnbürste nach einem der vorhergehenden Ansprüche 1 bis 6, **dadurch gekennzeichnet, dass** idealerweise der Abstand (D) 4,8 cm und die Höhe (H) 2,2 cm plus oder minus 2 oder 3 mm und vorzugsweise plus oder minus 1 mm beträgt.

9. Zahnbürste nach einem der vorhergehenden Ansprüche 1 bis 6, **dadurch gekennzeichnet, dass** idealerweise der Abstand (D) 5,4 cm und die Höhe (H) 1,7 cm plus oder minus 2 oder 3 mm und vorzugsweise plus oder minus 1 mm beträgt.

10. Zahnbürste nach einem der vorhergehenden Ansprüche 1 bis 6, **dadurch gekennzeichnet, dass** idealerweise der Abstand (D) 5,5 cm und die Höhe (H) 2,2 cm plus oder minus 2 oder 3 mm und vorzugsweise plus oder minus 1 mm beträgt.

11. Zahnbürste nach einem der vorhergehenden Ansprüche 1 bis 6, **dadurch gekennzeichnet, dass** idealerweise der Abstand (D) 5,8 cm und die Höhe (H) 2,8 cm plus oder minus 2 oder 3 mm und vorzugsweise plus oder minus 1 mm beträgt.

12. Zahnbürste nach einem der vorhergehenden Ansprüche, **dadurch gekennzeichnet, dass** der Griff (2) mit der der Arbeitslinie (L) zugewandten Konkavität gekrümmt ist.

13. Zahnbürste nach einem der vorhergehenden Ansprüche, **dadurch gekennzeichnet, dass** der Kopf (4) sich entlang einer Hauptlängsachse (Y) erstreckt, die parallel oder im wesentlichen parallel zur Hauptlängsachse (X oder X') des Griffs (2) ist.

14. Zahnbürste nach einem der vorhergehenden Ansprüche, **dadurch gekennzeichnet, dass** der Verbindungsabschnitt (3) einen nahe dem Kopf (4) liegenden Bereich (7) mit Hilfsborsten (6) umfasst.

15. Zahnbürste nach Anspruch 14, **dadurch gekennzeichnet, dass** die Hilfsborsten (6) am Verbindungsabschnitt (3) eine Arbeitsfläche (6a) ausbilden, die sich in einem Winkel zur durch die Arbeitsfläche (5a) der Primärborsten definierten Ebene erstreckt.

16. Zahnbürste nach Anspruch 14 oder 15, **dadurch gekennzeichnet, dass** die Hilfsborsten (6) am Verbindungsabschnitt (3) eine Arbeitsfläche (6a) ausbilden, die sich in einer Richtung parallel zur Oberfläche des Verbindungsabschnitts (3) erstreckt.

17. Zahnbürste nach einem der vorhergehenden Ansprüche, **dadurch gekennzeichnet, dass** sie einen Verbinder (9) zum Verbinden des Kopfes (4) mit dem Hauptkörper der Zahnbürste umfasst.

18. Zahnbürste nach Anspruch 17, **dadurch gekennzeichnet, dass** sie einen zwischen dem Kopf (4) und dem Verbindungsabschnitt (3) angeordneten Verbinder (9) umfasst, um den Wechsel des Kopfes (4) zu ermöglichen.

19. Zahnbürste nach Anspruch 17, **dadurch gekennzeichnet, dass** sie einen zwischen dem Verbindungsabschnitt (3) und dem Griff (4) angeordneten Verbinder umfasst.

20. Zahnbürste nach einem der vorhergehenden Ansprüche 17 bis 19, **dadurch gekennzeichnet, dass** der Verbinder (9) einen ersten Haken (10), der fest mit einem Ende des Kopfes (4) verbunden ist und einen zweiten Haken (11) umfasst, der mit einem Ende des Verbindungsabschnitts (3) verbunden ist; wobei die Haken (10, 11) ausgelegt sind, um lösbar aneinander gekoppelt zu sein.

21. Zahnbürste nach Anspruch 20, **dadurch gekennzeichnet, dass** die Haken (10, 11) identisch sind.

22. Zahnbürste nach Anspruch 20 oder 21, **dadurch gekennzeichnet, dass** jeder Haken (10, 11) eine entsprechend geformte Platte (12, 13) und einen jeweiligen Schlitz (14, 15) umfasst, wo der Schlitz (14) des ersten Hakens (10) so geformt ist, dass er mit der Platte (13) des zweiten Hakens (11) übereinstimmt, während der Schlitz (15) des zweiten Hakens (11) so geformt ist, dass er mit der Platte (12) des ersten Hakens (10) übereinstimmt.

23. Zahnbürste nach Anspruch 22, **dadurch gekennzeichnet, dass** jede Platte (12, 13) mit dem Kopf (4) bzw. mit dem Verbindungsabschnitt (3) jeweils durch einen ersten flachen Vorsprung (16) und einen zweiten flachen Vorsprung (17), die unter jedem Schlitz (14, 15) angeordnet sind, verbunden ist; wobei die Vorsprünge (16, 17) ausgelegt sind, dass sie nebeneinander positioniert werden.

24. Zahnbürste nach Anspruch 23, **dadurch gekennzeichnet, dass** die Platte (12) des ersten Hakens (10) einen ersten Stift (18) umfasst, der während des Einhängens in ein erstes Loch (19) passt, das im zweiten Vorsprung (17) des zweiten Hakens (11) gemacht wurde.

25. Zahnbürste nach Anspruch 24, **dadurch gekennzeichnet, dass** die erste Platte (12) des zweiten Hakens (11) einen zweiten Stift (20) umfasst, der während des Einhängens in ein zweites Loch (21) passt, das im ersten Vorsprung (16) des ersten Hakens (10) gemacht wurde.

26. Zahnbürste nach einem der vorhergehenden Ansprüche 17 bis 25, **dadurch gekennzeichnet, dass** der Verbinder ausgelegt ist, dass er sich löst, ohne vollständig getrennt zu werden.

27. Zahnbürste nach einem der vorhergehenden Ansprüche, **dadurch gekennzeichnet, dass** sie einen Kopf (25) umfasst, der mit einer um eine Achse (Y) drehbaren Rolle (26) ausgestattet ist und eine Vielzahl von senkrecht zur Seitenfläche der Rolle (26) angebrachten Borsten (27) aufweist und eine Arbeitslinie (L') bildet; und Motormittel, die ausgelegt sind, um die Rolle (26) um ihre Achse (Y) zu drehen.

28. Zahnbürste nach Anspruch 27, **dadurch gekennzeichnet, dass** die Drehachse (Y) der Rolle sich in einer Richtung im Wesentlichen parallel zur Hauptrichtung (X") erstreckt, in der der Zahnbürstengriff sich erstreckt.

29. Zahnbürste nach Anspruch 27 oder 28, **dadurch gekennzeichnet, dass** die Länge (S') der Arbeitsfläche der Borsten auf der Rolle in einem Bereich von 0,5 cm bis 2,1 cm und vorzugsweise von 0,5 cm bis 1,5 cm variiert.

30. Zahnbürste nach einem der vorhergehenden Ansprüche 28 bis 30, **dadurch gekennzeichnet, dass** die Motormittel einen Elektromotor und Übertragungsmittel umfassen, die den Motor mit der Rolle (26) verbinden.

31. Zahnbürste nach einem der vorhergehenden Ansprüche 27 bis 30, **dadurch gekennzeichnet, dass** die Motormittel in einem im Griff (23) ausgebildeten Hohlraum untergebracht sind.

32. Zahnbürste nach einem der vorhergehenden Ansprüche 27 bis 31, **dadurch gekennzeichnet, dass** der auf der gegenüberliegenden Seite der Arbeitslinie (L') angeordnete Borstenabschnitt von einer Kappe (28) abgedeckt ist.

33. Zahnbürste nach Anspruch 32, **dadurch gekennzeichnet, dass** die Kappe (28) der Zahnbürste abnehmbar assoziiert ist.

34. Zahnbürste nach einem der vorhergehenden Ansprüche, **dadurch gekennzeichnet, dass** der die Borsten (35) aufnehmende Kopf (34) unmittelbar auf der Verlängerung des Verbindungsabschnitts (33) gemacht ist.

35. Zahnbürste nach einem der vorhergehenden Ansprüche, **dadurch gekennzeichnet, dass** die Stirnfläche (34a) des Kopfes, von der sich die Borsten (35) erstrecken, schräg in einem Winkel zum Griff (32) und/oder zur Oberfläche (35a) geneigt ist, die durch die freien Enden der Borsten (35) definiert sind.

36. Zahnbürste nach einem der vorhergehenden Ansprüche, **dadurch gekennzeichnet, dass** die Borsten sich in der Höhe so unterscheiden, dass sie eine Arbeitsfläche (35a) bilden, die parallel oder im wesentlichen parallel zur Griffsachse (X) ist.

37. Zahnbürste nach einem der vorhergehenden Ansprüche, **dadurch gekennzeichnet, dass** der Griff (102) einen länglichen Abschnitt (110), der sich längs vom Kopf (104) weg erstreckt und der ausgelegt ist, um von den Fingern des Benutzers ergriffen zu werden, und einen Zwischeneingriffsabschnitt (112) umfasst, der zwischen dem länglichen Abschnitt (110) und dem Arbeitskopf (104) angeordnet ist, an dem mindestens einer der Finger des Benutzers liegen kann, wobei die Breite (W) des Zwischeneingriffsabschnittes (112) größer als die Breite (W') des länglichen Abschnitts (110) ist.

38. Zahnbürste nach einem der vorhergehenden Ansprüche, **dadurch gekennzeichnet, dass** der Griff (102) einen länglichen Abschnitt (110), der sich längs vom Kopf (104) weg erstreckt und der ausgelegt ist, um von den Fingern des Benutzers ergriffen zu werden, und einen Zwischeneingriffsabschnitt (112) umfasst, der zwischen dem länglichen Abschnitt (110) und dem Arbeitskopf (104) angeordnet ist, an dem mindestens einer der Finger des Benutzers liegen kann, wobei der Zwischeneingriffsabschnitt (112) eine Eingriffsfläche (112a) umfasst, die auf der gleichen Seite der Borsten angeordnet ist und an dem einer der Finger des Benutzers liegen kann.

39. Zahnbürste nach einem der vorhergehenden Ansprüche, **dadurch gekennzeichnet, dass** der Griff (102) einen länglichen Abschnitt (110), der sich längs vom Kopf (104) weg erstreckt und der ausgelegt ist, um von den Fingern des Benutzers ergriffen zu werden, und einen Zwischeneingriffsabschnitt (112) umfasst, der zwischen dem länglichen Abschnitt (110) und dem Arbeitskopf (104) angeordnet ist, an dem mindestens einer der Finger des Benutzers liegen kann, wobei der Zwischeneingriffsabschnitt (112) eine Eingriffsfläche (112b) umfasst, die auf der den Borsten gegenüberliegenden Seite angeordnet ist und auf der einer der Finger des Benutzers liegen kann.

40. Zahnbürste nach einem der vorhergehenden Ansprüche, **dadurch gekennzeichnet, dass** der Griff (102) einen länglichen Abschnitt (110), der sich längs vom Kopf (104) weg erstreckt und der ausgelegt ist, um von den Fingern des Benutzers ergriffen zu werden, und einen Zwischeneingriffsabschnitt (112) umfasst, der zwischen dem länglichen Abschnitt (110) und dem Arbeitskopf (104) angeordnet ist, an dem mindestens einer der Finger des Benutzers liegen kann, wobei der Zwischeneingriffsabschnitt (112) erste und zweite, obere und untere, gegenüberliegende Eingriffsflächen (112a, 112b) umfasst, an denen jeweilige Finger vom Benutzer liegen können.

41. Zahnbürste nach einem der vorhergehenden Ansprüche, **dadurch gekennzeichnet, dass** jede Eingriffsfläche (112a, 112b) in Querrichtung eine allgemein ebene Form aufweist.

42. Zahnbürste nach einem der vorhergehenden Ansprüche, **dadurch gekennzeichnet, dass** ein Zwischeneingriffsabschnitt (112) Seiten (112c, 112d) mit einer Bogenform aufweist.

43. Zahnbürste nach einem der vorhergehenden Ansprüche, **dadurch gekennzeichnet, dass** ein Zwischeneingriffsabschnitt (112) eine obere Eingriffsfläche (112a) umfasst, die in Längsrichtung eine Bogenform aufweist.

44. Zahnbürste nach einem der vorhergehenden Ansprüche, **dadurch gekennzeichnet, dass** ein Zwischeneingriffsabschnitt (112) eine untere Eingriffsfläche (112b) umfasst, die in Längsrichtung eine allgemein ebene Form aufweist.

45. Zahnbürste nach einem der vorhergehenden Ansprüche, **dadurch gekennzeichnet, dass** ein Zwischeneingriffsabschnitt (112) eine Höhe oder Dicke (T) aufweist, die in einem Bereich von 3 mm bis 7 mm variiert.

46. Zahnbürste nach einem der vorhergehenden Ansprüche, **dadurch gekennzeichnet, dass** ein länglicher Eingriffsabschnitt (110), um den die Finger umwickelt werden können, eine Höhe oder Dicke (T') zwischen 17 mm und 39 mm aufweist.

47. Zahnbürste nach einem der vorhergehenden Ansprüche, **dadurch gekennzeichnet, dass** der Griff (102) einen länglichen Abschnitt (110) umfasst, der sich längs vom Kopf (104) weg erstreckt und ausgelegt ist, um von den Fingern des Benutzers ergriffen zu werden und dessen Höhe (T') größer als seine Breite (W') ist.

48. Zahnbürste nach einem der vorhergehenden Ansprüche, **dadurch gekennzeichnet, dass** der Griff (102) einen länglichen Abschnitt (110) umfasst, der sich längs vom Kopf (104) weg erstreckt und ausgelegt ist, um von den Fingern des Benutzers ergriffen zu werden und dessen Höhe (T') größer als die Höhe (T) eines jeweiligen Zwischenabschnitts (112) ist, der zwischen dem länglichen Abschnitt (110) und dem Arbeitskopf (104) angeordnet ist, auf dem mindestens einer der Finger des Benutzers liegen kann.

49. Zahnbürste nach einem der vorhergehenden Ansprüche, **dadurch gekennzeichnet, dass** ein Zwischeneingriffsabschnitt (112) eine Breite (W) aufweist, die größer als die jeweilige Höhe (T) ist.

50. Zahnbürste nach einem der vorhergehenden Ansprüche, **dadurch gekennzeichnet, dass** der Griff (102) einen länglichen Abschnitt (110) umfasst, der sich längs vom Kopf (104) weg erstreckt und ausgelegt ist, um von den Fingern des Benutzers ergriffen zu werden und dessen Höhe (T') im wesentlichen gleich der Breite (W) des Zwischeneingriffsabschnitts (112) ist.

51. Zahnbürste nach einem der vorhergehenden Ansprüche, **dadurch gekennzeichnet, dass** der Griff (102) einen länglichen Abschnitt (110) umfasst, der sich längs vom Kopf (104) weg erstreckt und ausgelegt ist, um von den Fingern des Benutzers ergriffen zu werden und eine Kante (110a) auf der Seite der Borsten aufweist, die bogenförmig in Richtung der Borsten konkav ist.

52. Zahnbürste nach einem der vorhergehenden Ansprüche, **dadurch gekennzeichnet, dass** der Griff (102) einen länglichen Abschnitt (110) umfasst, der sich längs vom Kopf (104) weg erstreckt und ausgelegt ist, um von den Fingern des Benutzers ergriffen zu werden und eine Kante (110b) auf der Seite gegenüber den Borsten aufweist, die eine im wesentlichen lineare Form aufweist.

53. Zahnbürste nach einem der vorhergehenden Ansprüche, **dadurch gekennzeichnet, dass** der Zwischeneingriffsabschnitt (112) eine untere Eingriffsfläche (112b) umfasst, die im wesentlichen mit der unteren Kante (110b) des länglichen Abschnitts (110) fluchtet.

54. Zahnbürste nach einem der vorhergehenden Ansprüche, **dadurch gekennzeichnet, dass** ein länglicher Abschnitt (110) abgerundete Seiten (110c, 110d) aufweist.

55. Zahnbürste nach einem der vorhergehenden Ansprüche, **dadurch gekennzeichnet, dass** der Griff (102) einen länglichen Abschnitt (110), der sich längs vom Kopf (104) weg erstreckt und ausgelegt ist, um von den Fingern des Benutzers ergriffen zu werden, und einen Zwischenabschnitt (112) umfasst, der zwischen dem länglichen Abschnitt (110) und dem Arbeitskopf (104) angeordnet ist, auf dem mindestens einer der Finger des Benutzers liegen kann, wo die beiden Abschnitte sich in zueinander senkrechte Richtungen erstrecken.

56. Zahnbürste nach einem der vorhergehenden Ansprüche, **dadurch gekennzeichnet, dass** der Griff (202) einen länglichen Abschnitt (310), der sich längs vom Kopf (104) weg erstreckt und ausgelegt ist, um von den Fingern des Benutzers ergriffen zu werden, und einen Zwischenabschnitt (312) umfasst, der zwischen dem länglichen Abschnitt (310) und dem Arbeitskopf (304) angeordnet ist, auf dem mindestens einer der Finger des Benutzers liegen kann, wo der Zwischeneingriffsabschnitt relativ zum länglichen Abschnitt (310) beweglich ist.

57. Zahnbürste nach Anspruch 56, **dadurch gekennzeichnet, dass** der Zwischeneingriffsabschnitt (312) am länglichen Abschnitt (310) durch eine flexible Verbindung angeschlossen ist.

58. Zahnbürste nach Anspruch 57, **dadurch gekennzeichnet, dass** der Zwischeneingriffsabschnitt (312) am länglichen Abschnitt (310) durch einen verengenden Abschnitt angeschlossen ist.

59. Zahnbürste nach einem der vorhergehenden Ansprüche, **dadurch gekennzeichnet, dass** der Kopf (4) gegenüber der imaginären Linie (T) parallel zur Längsachse (X) des Griffs in einem Winkel (A oder B) nach oben oder nach unten geneigt ist, der vorzugsweise kleiner oder gleich wie 15° ist.

60. Zahnbürste nach einem der vorhergehenden Ansprüche, **dadurch gekennzeichnet, dass** der Borstenbefestigungskopf rechteckig oder elliptisch mit einer Breite zwischen 7 mm und 15 mm, vorzugsweise 14 mm, einer Länge zwischen 19 mm und 25 mm, vorzugsweise zwischen 21 mm und 23 mm und einer Dicke von 4 oder 5 mm ausgebildet ist.

61. Zahnbürste nach einem der vorhergehenden Ansprüche, **dadurch gekennzeichnet, dass** die Borsten auf dem Zahnbürstenkopf vorzugsweise in mehreren parallelen Reihen angeordnet sind.

62. Zahnbürste nach Anspruch 61, **dadurch gekennzeichnet, dass** die Borsten am Zahnbürstenkopf in mehreren parallelen Reihen, vorzugsweise aus zwei bis sechs Reihen (051, 052, 053, 054, 055, 056) angeordnet sind.

63. Zahnbürste nach Anspruch 61 oder 62, **dadurch gekennzeichnet, dass** jede Borstenreihe (051, 052, 053, 054, 055, 056) jeweilige Borstengruppen (05') umfasst, die durch einen kleinen Raum (07) getrennt sind; und dass die Borstengruppen (05') abwechselnd gestaltet sind, so dass die einer Reihe in transversaler Richtung mit den Trennräumen (07) der benachbarten Reihe ausgerichtet sind.

64. Zahnbürste nach einem der vorhergehenden Ansprüche 62 bis 64, **dadurch gekennzeichnet, dass** die Borsten der Seitenreihen (051, 052, 055, 056) weicher als die der zentralen Reihen (053, 054) sind.

65. Zahnbürste nach Anspruch 14, **dadurch gekennzeichnet, dass** die Borsten (06) auf dem Verbindungsabschnitt (03) mehrere parallele Reihen (061, 062, 063) umfassen, die sich quer zur Hauptrichtung erstrecken, in der der Kopf (04) sich erstreckt.

66. Zahnbürste nach Anspruch 27, **dadurch gekennzeichnet, dass** die Zahnbürste Drucktastensteuermittel (413a, 413b) umfasst, um die Drehrichtung des Borstenmontagekopfes zu aktivieren oder auszuwählen.

67. Zahnbürste nach Anspruch 66, **dadurch gekennzeichnet, dass** die Drucktastensteuermittel (413a, 413b) auf gegenüberliegenden Seiten des Zahnbürstengriffes angebracht sind.

68. Zahnbürste nach Anspruch 27, **dadurch gekennzeichnet, dass** die Zahnbürste Drucktastensteuermittel (29, 429) umfasst, um mit dem Drehen des Borstenmontagekopfes zu beginnen.

69. Zahnbürste nach Anspruch 68, **dadurch gekennzeichnet, dass** die Drucktastensteuermittel (29, 429) zum Starten des Drehens des Borstenmontagekopfes auf der dem Kopf (26) am nächsten liegenden Seite des Griffs angeordnet.

70. Zahnbürste nach einem der vorhergehenden Ansprüche, **dadurch gekennzeichnet, dass** der Griff aus Kunststoff besteht.

71. Zahnbürste nach einem der vorhergehenden Ansprüche, **dadurch gekennzeichnet, dass** der Griff aus einem flexiblen Material besteht.

## Revendications

1. Brosse à dents comprenant un manche (2, 23), une tête (4, 25) et une pluralité de poils (5, 26) attachés à une face (4a) de la tête (4) ; dans laquelle les extrémités libres (5a) des poils (5) forment une ligne de travail (L, L') de la brosse à dents (1) et dans laquelle la ligne de travail définie par les extrémités des poils peut former une surface de travail plate ou une surface de travail étant incurvée dans une direction transversale ; ladite brosse à dents comprenant une partie de raccordement (3, 24) située entre le manche (2, 23) et la tête (4, 25), avec le manche (2, 23) et la partie de raccordement (3, 24) se prolongeant du manche (4, 25) dans une direction opposée à celle des poils (5, 26) définissant la ligne de travail (L, L') ; ledit manche (2) se prolongeant aussi le long d'un axe longitudinal principal (X) et la ligne de travail de la brosse à dents (L) se prolongeant longitudinalement dans une direction parallèle à l'axe principal (X) du manche (2) ; le manche (2) comprenant également un support d'appui des doigts (8) situé du même côté (2a) du manche (2), comme les poils (5), sur lequel un utilisateur peut mettre en prise un doigt en tenant le manche (2), ladite partie de raccordement (3) se prolongeant dans une direction linéaire ou substantiellement linéaire et comportant une surface supérieure (3') étant linéaire ou substantiellement linéaire ; la brosse à dents étant **caractérisée en ce que** la hauteur (H) entre un point d'extrémité (P) du support d'appui des doigts (8) et la ligne de travail (L) de la brosse à dents (1) varie de 1,7 à 3,5 cm.

2. Brosse à dents selon la revendication 1, **caractérisée en ce que** la partie de raccordement (3) comporte une surface supérieure (3') étant concave dans la direction des poils.

3. Brosse à dents selon l'une quelconque des revendications précédentes, **caractérisée en ce que** la distance (D), entre un point d'extrémité (P) du support d'appui des doigts (8) et un point (A), défini par les extrémités libre des poils (5) les plus proches du support d'appui des doigts (8), varie de 4,0 à 7,0 cm.

4. Brosse à dents selon la revendication 3, **caractérisée en ce que** la distance (D), entre un point d'extrémité (P) du support d'appui des doigts (8) et un point (A), défini par les extrémités libre des poils (5) les plus proches du support d'appui des doigts (8), varie de 4,6 à 5,8 cm.

5. Brosse à dents selon l'une quelconque des revendications précédentes, **caractérisée en ce que** la hauteur (H) entre le point (P) et la ligne de travail (L) de la brosse à dents (1) varie de 1,7 à 2,8 cm.

6. Brosse à dents selon l'une quelconque des revendications précédentes, **caractérisée en ce que** la longueur (S) de la surface de travail (5a) des poils varie de 1,0 à 3,0 cm et, de préférence, de 1,8 à 2,3 cm.

7. Brosse à dents selon l'une quelconque des revendications précédentes, **caractérisée en ce que**, idéalement, la distance (D) mesure 4,6 cm et la hauteur (H) 1,7 cm, plus ou moins 2 ou 3 mm et, de préférence, plus ou moins 1 mm.

8. Brosse à dents selon l'une quelconque des revendications de 1 à 6, **caractérisée en ce que**, idéalement, la distance (D) mesure 4,8 cm et la hauteur (H) 2,2 cm, plus ou moins 2 ou 3 mm et, de préférence, plus ou moins 1 mm.

9. Brosse à dents selon l'une quelconque des revendications de 1 à 6, **caractérisée en ce que**, idéalement, la distance (D) mesure 5,4 cm et la hauteur (H) 1,7 cm, plus ou moins 2 ou 3 mm et, de préférence, plus ou moins 1 mm.

10. Brosse à dents selon l'une quelconque des revendications de 1 à 6, **caractérisée en ce que**, idéalement, la distance (D) mesure 5,5 cm et la hauteur (H) 2,2 cm, plus ou moins 2 ou 3 mm et, de préférence, plus ou moins 1 mm.

11. Brosse à dents selon l'une quelconque des revendications de 1 à 6, **caractérisée en ce que**, idéalement, la distance (D) mesure 5,8 cm et la hauteur (H) 2,8 cm, plus ou moins 2 ou 3 mm et, de préférence, plus ou moins 1 mm.

12. Brosse à dents selon l'une quelconque des revendications précédentes, **caractérisée en ce que** le manche (2) est incurvé avec la concavité orientée vers la ligne de travail (L).

13. Brosse à dents selon l'une quelconque des revendications précédentes, **caractérisée en ce que** la tête (4) se prolonge le long d'un axe longitudinal principal (Y) étant parallèle ou substantiellement parallèle à l'axe longitudinal principal (X ou X') du manche (2).

14. Brosse à dents selon l'une quelconque des revendications précédentes, **caractérisée en ce que** la partie de raccordement (3) comprend une zone (7) située à proximité de la tête (4) et comportant des poils supplémentaires (6).

15. Brosse à dents selon la revendication 14, **caractérisée en ce que** les poils supplémentaires (6) sur la partie de raccordement (3) forment une surface de travail (6a) se prolongeant selon un angle par rapport au plan défini par la surface de travail (5a) des poils principaux.

16. Brosse à dents selon la revendication 14 ou 15, **caractérisée en ce que** les poils supplémentaires (6) sur la partie de raccordement (3) forment une surface de travail (6a) se prolongeant dans une direction parallèle à la surface de la partie de raccordement (3).

17. Brosse à dents selon l'une quelconque des revendications précédentes, **caractérisée en ce qu'**elle comprend un raccord (9) servant à raccorder la tête (4) au corps principal de la brosse à dents.

18. Brosse à dents selon la revendication 17, **caractérisée en ce qu'**elle comprend un raccord (9) situé entre la tête (4) et la partie de raccordement (3) pour permettre à la tête (4) d'être changée.

19. Brosse à dents selon la revendication 17, **caractérisée en ce qu'**elle comprend un raccord situé entre la partie de raccordement (3) et le manche (4).

20. Brosse à dents selon l'une quelconque des revendications de 17 à 19, **caractérisée en ce que** le raccord (9) comprend un premier crochet (10) relié fixement à une extrémité de la tête (4) et un second crochet (11) relié à une extrémité de la partie de raccordement (3) ; les crochets (10, 11) étant conçus pour être joints l'un à l'autre de façon amovible.

21. Brosse à dents selon la revendication 20, **caractérisée en ce que** les crochets (10, 11) sont identiques.

22. Brosse à dents selon la revendication 20 ou 21, **caractérisée en ce que** chaque crochet (10, 11) comprend une plaque façonnée (12, 13) appropriée et une fente (14, 15) respective où la fente (14) du premier crochet (10) possède une forme adaptée à la plaque (13) du second crochet (11), tandis que la fente (15) du second crochet (11) possède une forme adaptée à la plaque (12) du premier crochet (10).

23. Brosse à dents selon la revendication 22, **caractérisée en ce que** chaque plaque (12, 13) est reliée à la tête (4) ou à la partie de raccordement (3) respectivement par une première saillie plate (16) et une seconde saillie plate (17) située sous chaque fente (14, 15) ; lesdites saillies (16, 17) étant conçues pour être positionnées côte à côte.

24. Brosse à dents selon la revendication 23, **caractérisée en ce que** la plaque (12) du premier crochet (10) comprend une première cheville (18) qui, lors de l'action d'accrochage, s'adapte à un premier orifice (19) réalisé dans la seconde saillie (17) du second crochet (11).

25. Brosse à dents selon la revendication 24, **caractérisée en ce que** la première plaque (12) du second crochet (11) comprend une seconde cheville (20) qui, lors de l'action d'accrochage, s'adapte à un second orifice (21) réalisé dans la première saillie (16) du premier crochet (10).

26. Brosse à dents selon l'une quelconque des revendications précédentes de 17 à 25, **caractérisée en ce que** le raccord se desserre sans se détacher complètement.

27. Brosse à dents selon l'une quelconque des revendications précédentes, **caractérisée en ce qu'**elle comprend une tête (25) équipée d'un rouleau (26) pouvant pivoter autour d'un axe (Y) et comportant une pluralité de poils (27) fixés perpendiculairement à la surface latérale du rouleau (26) et formant une ligne de travail (L') ; et des moyens motorisés conçus pour faire tourner le rouleau (26) autour de son axe (Y).

28. Brosse à dents selon la revendication 27, **caractérisée en ce que** l'axe de rotation (Y) du rouleau se prolonge dans une direction substantiellement parallèle à la direction principale (X") dans laquelle se prolonge le manche de la brosse à dents.

29. Brosse à dents selon la revendication 27 ou 28, **caractérisée en ce que** la longueur (S') de la surface de travail des poils sur le rouleau varie de 0,5 à 2,1 cm et, de préférence, de 0,5 à 1,5 cm.

30. Brosse à dents selon l'une quelconque des revendications de 28 à 30, **caractérisée en ce que** les moyens motorisés comprennent un moteur électrique et des moyens de transmission reliant le moteur au rouleau (26).

31. Brosse à dents selon l'une quelconque des revendications de 27 à 30, **caractérisée en ce que** les moyens motorisés sont logés dans une cavité formée dans le manche (23).

32. Brosse à dents selon l'une quelconque des revendications de 27 à 31, **caractérisée en ce que** la partie de poils située sur le côté opposé de la ligne de travail (L') est recouverte par un capuchon (28).

33. Brosse à dents selon la revendication 32, **caractérisée en ce que** le capuchon (28) est associé à la brosse à dents de façon amovible.

34. Brosse à dents selon l'une quelconque des revendications précédentes, **caractérisée en ce que** la tête (34) montant les poils (35) est réalisée directement sur l'extension de la partie de raccordement (33).

35. Brosse à dents selon l'une quelconque des revendications précédentes, **caractérisée en ce que** la face (34a) de la tête de laquelle les poils (35) se prolongent est inclinée selon un angle par rapport au manche (32) et/ou à la surface (35a) définie par les extrémités libres des poils (35).

36. Brosse à dents selon l'une quelconque des revendications précédentes, **caractérisée en ce que** les poils diffèrent en hauteur de manière à former une surface de travail (35a) étant parallèle ou substantiellement parallèle à l'axe du manche (X).

37. Brosse à dents selon l'une quelconque des revendications précédentes, **caractérisée en ce que** le manche (102) comprend une partie allongée (110) se prolongeant dans le sens de la longueur en s'éloignant de la tête (104) et étant conçue pour être saisie par les doigts de l'utilisateur, et une partie d'engagement (112) intermédiaire, située entre la partie allongée (110) et la tête de travail (104), sur laquelle au moins un des doigts de l'utilisateur peut reposer, où la largeur (W) de la partie d'engagement (112) intermédiaire est plus grande que la largeur (W') de la partie allongée (110).

38. Brosse à dents selon l'une quelconque des revendications précédentes, **caractérisée en ce que** le manche (102) comprend une partie allongée (110) se prolongeant dans le sens de la longueur en s'éloignant de la tête (104) et étant conçue pour être saisie par les doigts de l'utilisateur, et une partie d'engagement (112) intermédiaire, située entre la partie allongée (110) et la tête de travail (104), sur laquelle au moins un des doigts de l'utilisateur peut reposer, où la partie d'engagement (112) intermédiaire comprend une surface d'engagement (112a) étant située du même côté que les poils et sur laquelle un des doigts de l'utilisateur peut reposer.

39. Brosse à dents selon l'une quelconque des revendications précédentes, **caractérisée en ce que** le manche (102) comprend une partie allongée (110) se prolongeant dans le sens de la longueur en s'éloignant de la tête (104) et étant conçue pour être saisie par les doigts de l'utilisateur, et une partie d'engagement (112) intermédiaire, située entre la partie allongée (110) et la tête de travail (104), sur laquelle au moins un des doigts de l'utilisateur peut reposer, où la partie d'engagement (112) intermédiaire comprend une surface d'engagement (112b) étant située sur le côté opposé aux poils et sur laquelle un des doigts de l'utilisateur peut reposer.

40. Brosse à dents selon l'une quelconque des revendications précédentes, **caractérisée en ce que** le manche (102) comprend une partie allongée (110) se prolongeant dans le sens de la longueur en s'éloignant de la tête (104) et étant conçue pour être saisie par les doigts de l'utilisateur, et une partie d'engagement (112) intermédiaire, située entre la partie allongée (110) et la tête de travail (104), sur laquelle au moins un des doigts de l'utilisateur peut reposer, où la partie d'engagement (112) intermédiaire comprend des première et seconde surfaces d'engagement (112a, 112b) supérieure et inférieure sur lesquelles des doigts respectifs de l'utilisateur peuvent reposer.

41. Brosse à dents selon l'une quelconque des revendications précédentes, **caractérisée en ce que** chaque surface d'engagement (112a, 112b) possède, dans la direction transversale, une forme généralement planaire.

42. Brosse à dents selon l'une quelconque des revendications précédentes, **caractérisée en ce qu'**une partie d'engagement (112) intermédiaire comporte des côtés (112c, 112d) de forme arquée.

43. Brosse à dents selon l'une quelconque des revendications précédentes, **caractérisée en ce qu'**une partie d'engagement (112) intermédiaire comporte une surface d'engagement supérieure (112a) qui, dans la direction longitudinale, possède une forme arquée.

44. Brosse à dents selon l'une quelconque des revendications précédentes, **caractérisée en ce qu'**une partie d'engagement (112) intermédiaire comporte une surface d'engagement inférieure (112b) qui, dans la direction longitudinale, possède une forme généralement planaire.

45. Brosse à dents selon l'une quelconque des revendications précédentes, **caractérisée en ce qu'**une partie d'engagement (112) intermédiaire comporte une hauteur ou épaisseur (T) variant de 3 à 7 mm.

46. Brosse à dents selon l'une quelconque des revendications précédentes, **caractérisée en ce qu'**une partie d'engagement allongée (110), autour de laquelle les doigts peuvent s'enrouler, comporte une hauteur ou épaisseur (T') comprise entre 17 et 39 mm.

47. Brosse à dents selon l'une quelconque des revendications précédentes, **caractérisée en ce que** le manche (102) comprend une partie allongée (110) se prolongeant dans le sens de la longueur en s'éloignant de la tête (104) et conçue pour être saisie par les doigts de l'utilisateur, et dont la hauteur (T') est supérieure à sa largeur (W').

48. Brosse à dents selon l'une quelconque des revendications précédentes, **caractérisée en ce que** le manche (102) comprend une partie allongée (110) se prolongeant dans le sens de la longueur en s'éloignant de la tête (104) et conçue pour être saisie par les doigts de l'utilisateur, et dont la hauteur (T') est supérieure à la hauteur (T) d'une partie intermédiaire (112) respective située entre la partie allongée (110) et la tête de travail (104), sur laquelle au moins un des doigts de l'utilisateur peut reposer.

49. Brosse à dents selon l'une quelconque des revendications précédentes, **caractérisée en ce qu'**une partie d'engagement (112) intermédiaire comporte une largeur (W) étant supérieure à la hauteur respective (T).

50. Brosse à dents selon l'une quelconque des revendications précédentes, **caractérisée en ce que** le manche (102) comprend une partie allongée (110) se prolongeant dans le sens de la longueur en s'éloignant de la tête (104) et conçue pour être saisie par les doigts de l'utilisateur, et dont la hauteur (T') est substantiellement égale à la largeur (W) de la partie d'engagement (112) intermédiaire.

51. Brosse à dents selon l'une quelconque des revendications précédentes, **caractérisée en ce que** le manche (102) comprend une partie allongée (110) se prolongeant dans le sens de la longueur en s'éloignant de la tête (104) et conçue pour être saisie par les doigts de l'utilisateur, et comportant un bord (110a) du côté des poils étant de forme arquée de façon concave dans la direction des poils.

52. Brosse à dents selon l'une quelconque des revendications précédentes, **caractérisée en ce que** le manche (102) comprend une partie allongée (110) se prolongeant dans le sens de la longueur en s'éloignant de la tête (104) et conçue pour être saisie par les doigts de l'utilisateur, et comportant un bord (110b) du côté opposé aux poils étant de forme substantiellement linéaire.

53. Brosse à dents selon l'une quelconque des revendications précédentes, **caractérisée en ce que** la partie d'engagement (112) intermédiaire comporte une surface d'engagement inférieure (112b) étant substantiellement alignée par rapport au bord inférieur (110b) de la partie allongée (110).

54. Brosse à dents selon l'une quelconque des revendications précédentes, **caractérisée en ce que** la partie allongée (110) comporte des côtés arrondis (110c, 110d).

55. Brosse à dents selon l'une quelconque des revendications précédentes, **caractérisée en ce que** le manche (102) comprend une partie allongée (110) se prolongeant dans le sens de la longueur en s'éloignant de la tête (104) et étant conçue pour être saisie par les doigts de l'utilisateur, et une partie intermédiaire (112), située entre la partie allongée (110) et la tête de travail (104), sur laquelle au moins un des doigts de l'utilisateur peut reposer, où lesdites deux parties se prolongent dans des directions perpendiculaires l'une à l'autre.

56. Brosse à dents selon l'une quelconque des revendications précédentes, **caractérisée en ce que** le manche (202) comprend une partie allongée (310) se prolongeant dans le sens de la longueur en s'éloignant de la tête (104) et étant conçue pour être saisie par les doigts de l'utilisateur, et une partie intermédiaire (312), située entre la partie allongée (310) et la tête de travail (304), sur laquelle au moins un des doigts de l'utilisateur peut reposer, où ladite partie d'engagement intermédiaire est mobile par rapport à la partie allongée (310).

57. Brosse à dents selon la revendication 56, **caractérisée en ce que** la partie d'engagement intermédiaire (312) est jointe à la partie allongée (310) par un raccord flexible.

58. Brosse à dents selon la revendication 57, **caractérisée en ce que** la partie d'engagement intermédiaire (312) est jointe à la partie allongée (310) par une partie de rétrécissement.

59. Brosse à dents selon l'une quelconque des revendications précédentes, **caractérisée en ce que** la tête (4) est inclinée vers le haut ou vers le bas par rapport à la ligne imaginaire (T) parallèle à l'axe longitudinal (X) du manche selon un angle (A ou B) étant de préférence inférieur ou égal à 15°.

60. Brosse à dents selon l'une quelconque des revendications précédentes, **caractérisée en ce que** la tête de montage des poils possède une forme rectangulaire ou elliptique, ayant une largeur comprise entre 7 et 15 mm, de préférence 14 mm, une longueur comprise entre 19 et 25 mm, de préférence comprise entre 21 et 23 mm et une épaisseur mesurant 4 ou 5 mm.

61. Brosse à dents selon l'une quelconque des revendications précédentes, **caractérisée en ce que** les poils sur la tête de la brosse à dent sont disposés de préférence selon une pluralité de rangées parallèles.

62. Brosse à dents selon la revendication 61, **caractérisée en ce que** les poils sur la tête de la brosse à dents sont disposés selon une pluralité de rangées parallèles, de préférence de deux à six rangées (051, 052, 053, 054, 055, 056).

63. Brosse à dents selon la revendication 61 ou 62, **caractérisée en ce que** chaque rangée de poils (051, 052, 053, 054, 055, 056) comprend des groupes respectifs de poils (05') séparés par un petit espace (07) ; et **en ce que** les groupes de poils (05') sont disposés de manière alternée de sorte que ceux d'une rangée soient alignés, dans la direction transversale, avec les espaces de séparation (07) de la rangée adjacente.

64. Brosse à dents selon l'une quelconque des revendications précédentes de 62 à 64, **caractérisée en ce que** les poils des rangées latérales (051, 052, 055, 056) sont plus doux que ceux des rangées centrales (053, 054).

65. Brosse à dents selon la revendication 14, **caractérisée en ce que** les poils (06) sur la partie de raccordement (03) comprennent une pluralité de rangées parallèles (061, 062, 063) se prolongeant transversalement à la direction principale dans laquelle la tête (04) se prolonge.

66. Brosse à dents selon la revendication 27, **caractérisée en ce que** la brosse à dents comprend des moyens de commande à bouton-pressoir (413a, 413b) pour permettre de sélectionner la direction de rotation de la tête de montage des poils.

67. Brosse à dents selon la revendication 66, **caractérisée en ce que** les moyens de commande à bouton-pressoir (413a, 413b) sont montés sur des faces opposées du manche de la brosse à dents.

68. Brosse à dents selon la revendication 27, **caractérisée en ce que** la brosse à dents comprend des moyens de commande à bouton-pressoir (29, 429) pour démarrer la rotation de la tête de montage des poils.

69. Brosse à dents selon la revendication 68, **caractérisée en ce que** les moyens de commande à bouton-pressoir (29, 429), servant à démarrer la rotation de la tête de montage des poils, sont situés du côté du manche le plus proche de la tête (26).

70. Brosse à dents selon l'une quelconque des revendications précédentes, **caractérisée en ce que** le manche est en matière plastique.

71. Brosse à dents selon l'une quelconque des revendications précédentes, **caractérisée en ce que** le manche est constitué d'un matériau souple.
